# EUROPEAN PATENT SPECIFICATION

(11) **EP 1 087 355 B1**
(45) Date of publication and mention of the grant of the patent: **19.10.2011**
(21) Application number: 00308346.6
(22) Date of filing: 22.09.2000
(51) Int. Cl.: H04W 8/24, G08C 23/04

(54) **Portable radio terminal with remote control**
Tragbares Funk-Endgerät mit Fernbedienung
Terminal radio portable avec télécommande

(30) Priority: 24.09.1999 JP 26970599
(43) Date of publication of application: 28.03.2001
(60) Divisional application: 08104938.9
(73) Proprietor: NEC Corporation, Minato-ku Tokyo 108-8001 (JP)
(72) Inventor: Kuramatsu, Hiroyasu, Minato-ku, Tokyo (JP)
(74) Representative: W.P. Thompson & Co.

(56) References cited:
- US-A- 5 201 067

## Description

The present invention relates to a portable radio terminal. A portable radio terminal having a plurality of keys will be described below, by way of example, in illustration of the invention.

Portable radio terminals, for example portable telephones, are able to use communication services in more and more locations as the devices become more compact and lightweight, and as service areas expand. As a consequence, a user tends always to carry a portable radio terminal, not only when on a visit, but also at home.

Along with the reduction in the size and the weight of portable radio terminals, advanced communication services have become available in communication systems, and a portable radio terminal itself is controlled by a CPU (Central Processing Unit) having a high processing ability. For example, a portable telephone may be provided with a telephone directory function, which enables the direct calling of another party, who has been registered in advance, by the operation of a key with a minimum of labour. A portable telephone having a data communication function is able to access various servers on the Internet in which computer networks are connected to each other in order to browse the contents. As described above, such advanced additional functions provide added value to a portable radio terminal.

One of the additional functions providing added value to a portable radio terminal is a remote control (to be referred to as an RC hereinafter) function that takes the portability or the key sharing of a terminal into consideration. The RC function in one example is able, by sending RC data, to control, from a remote site, an electronic device and thus the contents of a home, using infra red rays.

There are many multifunctional home electronics equipment and apparatus, each having an RC unit capable of being operated remotely. However, the RC units have various shapes and their individual operation is complicated due to the multiple and various functions of the electronic devices, and the operation of each electronic device is therefore very cumbersome. To reduce this complication, a technique has been proposed in which the above-described RC function unit is attached to a portable radio terminal, such as a portable telephone having a key layout that is familiar to the user in operation because the user always carries it. This eliminates the cumbersome operation for each of the plurality of RC units and improves the operability of the RC function.

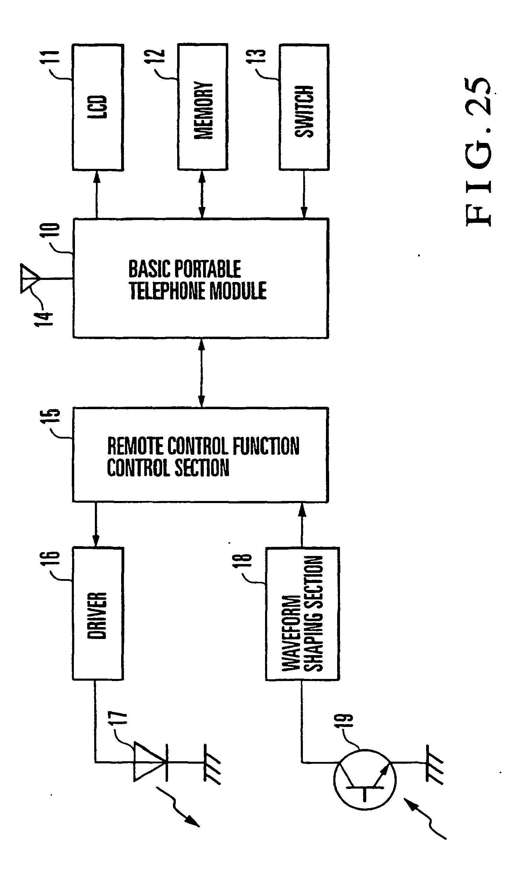

Reference will now be made to Fig. 25 of the accompanying drawings, which shows a block schematic circuit diagram of a previously proposed portable radio telephone having an RC function.

Referring to Fig. 25, there is shown a portable radio terminal which has a basic portable telephone module 10, an LCD (Liquid Crystal Display) 11, a memory 12, and a switch 13, as in a normal portable telephone. The basic portable telephone module 10 has an antenna 14 and is able to carry out the normal speech communication function, or a telephone directory function, through a mobile communication network (not shown). The basic portable telephone module 10 carries out speech communication by mobile communication through the antenna 14, in accordance with an input operation to the switch 13 on the basis of various kinds of setting information stored in the memory 12. At this time, before the start of speech communication, the telephone directory or speech communication state is displayed on the LCD 11.

This portable radio terminal also has an RC function control section 15, a driver 16, a light-emitting element 17, a waveform shaping section 18, and a phototransistor 19. The RC function control section 15 controls the RC function. In this portable radio terminal, the control is switched to the basic portable telephone module 10, or to the RC function control section 15 by mode switching through the switch 13.

When the RC function is selected by mode switching the RC function control section 15 performs, through the basic portable telephone module 10, the RC operation corresponding to the input operation of the switch 13 on the basis of various kinds of setting information stored in the memory 12. More specifically, an RC data pattern registered in the memory 12 in advance in correspondence with the pressed key of the switch 13 is read out, and the driver 16 causes the light-emitting element 17 to emit light.

For such an RC operation, this portable radio terminal can register RC data corresponding to a unique RC unit used by the user. The user performs a desired RC operation while directing the light-emitting section of an available RC toward the phototransistor 19 of the portable radio terminal. In the portable radio terminal, the phototransistor photoelectrically converts the RC data in accordance with the user's operation, and the waveform shaping section 18 converts the RC data into digital data in order to acquire pattern signal data.

The RC function control section 15 registers, in the memory 12, a function name for specifying the type of pattern signal data registered through the switch 13, and the pattern signal data digitized by the waveform shaping section 18, in correspondence with each other. Thus, the user registers RC data, in the portable radio terminal, in units of operations of the available RC unit.

A selection window for registered function names is displayed on the LCD 11. When a function name is selected by the switch 13, a corresponding pattern signal data is read out from the memory 12. The readout pattern signal data is input to the light-emitting element 17 through the driver 16, so that light corresponding to a predetermined pattern is emitted. Such a radio portable terminal having an RC function is disclosed in Japanese Patent Laid-Open No. 9-233549 entitled as "Portable Telephone Set".

However, in the previously proposed portable radio terminal having an RC function, the RC data of an available RC unit must be registered in advance in order to operate the RC function. The registration operation is very cumbersome and time-consuming. More specifically, a pattern signal emitted from an available RC unit must be received by the phototransistor and stored in the memory, and the function name of the pattern signal, required upon pressing a key, must be input in units of the RC operations to be registered.

Additionally, in the above-described previously proposed portable radio terminal, the operability inevitably degrades and visibility is poor. This is because a text-type selection window is displayed on the LCD 11, and a function name is selected therefrom. To solve this problem, each registered RC operation can be assigned to a plurality of keys of the radio portable terminal. However, the number of keys is too small to share a plurality of RC units, and the key assignment must be changed in units of the RC units. In this case, the user is easily confused in endeavouring to recognize which RC unit is being operated, and the operability is considerably degraded.

US-A-5 201 067 discloses a personal communications device which comprises a wireless transceiver arranged to allow a two-way exchange of user information, and to allow downloading of remote control signalling information.

Features of a portable telephone to be described below, by way of example in illustration of the invention, are that it provides a portable radio terminal that it is capable of registering RC data comparatively easily, and that it has improved operability for RC.

According to an aspect of the present invention, there is provided a portable radio terminal according to claim 1.

The following description and drawings disclose, by means of examples, the invention which is defined in the appended claims, whose terms determine the extent of the protection conferred hereby.

In the drawings:-
Fig. 1 is a block schematic view showing a communication system to which an arrangement illustrative of the present invention is applicable,
Fig. 2 is a front view showing the outer appearance of a portable radio terminal,
Fig. 3 is a block schematic circuit diagram of the portable radio terminal shown in Fig. 2,
Fig. 4 is a flow chart outlining a user's operating steps to implement an RC function in the portable radio terminal shown in Fig. 2,
Fig. 5 is a flow chart for use in describing Internet access processing using the portable radio terminal shown in Fig. 2,
Fig. 6 is an illustration of a display of a menu on an LCD of a portable terminal,
Fig. 7 is a view showing the URL setting window on an LCD of a portable terminal,
Fig. 8 is a view showing a downloaded home page image on an LCD of a portable terminal,
Fig. 9 is an illustration of a downloaded menu display on an LCD of a portable terminal,
Fig. 10 is a flow chart for use in illustrating the processing of a function mode setting in the portable radio terminal shown in Fig. 2,
Fig. 11 is an illustration of a model selection menu display on an LCD of a portable telephone,
Fig. 12 is an illustration of an RC operation window on an LCD of a portable telephone,
Fig. 13 is a flow chart for use in describing the processing of the RC function shown in Fig. 10,
Figs. 14A to 14C are views of signal code patterns,
Figs. 15A to 15F are views of the light emission signal patterns of an RC operation,
Fig. 16 is a view showing a light emission signal output from a light-emitting element;
Fig. 17 is a view showing the state of air conditioning apparatus selection on an LCD of a portable terminal,
Fig. 18 is a view showing the state of an RC operation display of an air conditioning apparatus on the LCD of a portable terminal,
Fig. 19 is a block schematic circuit diagram of a portable radio terminal in a second illustrative arrangement,
Fig. 20 is a flow chart for use in outlining a user's operating steps for implementing the RC function of the portable radio terminal shown in Fig. 19,
Fig. 21 is a flow chart for use in describing Internet access processing of the portable radio terminal shown in Fig. 19,
Fig. 22 is a flow chart for use in describing the processing of the RC function in the portable radio terminal shown in Fig. 19,
Fig. 23 is a block schematic circuit diagram of a portable radio terminal in a third illustrative arrangement, and
Fig. 24 is a front view of the outer appearance of the portable radio terminal referred to in Fig. 23.

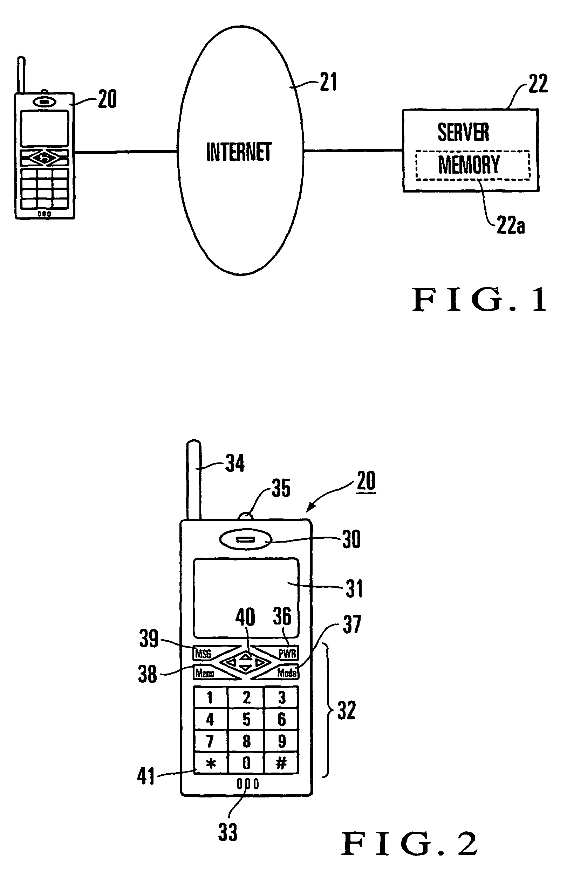

Referring to Fig. 1, a portable radio terminal 20 is shown connected to a server 22, in which RC data is to be stored, through the Internet 21 as a data communication network in which computer networks (not shown) are connected to each other.

The portable radio terminal 20 has an RC function for operating an electronic device by remote control using infrared rays, and mobile communication is carried out through a mobile communication network (not shown). The server 22 has a memory 22a for storing RC data relating to various kinds of electronic devices. RC data stored in the memory 22a are downloaded to the portable radio terminal 20 through the Internet 21.

As shown in Fig. 2, the portable radio terminal 20 has a loudspeaker 30, an LCD 31, a switch section 32, and a microphone 33, which are sequentially laid out from the upper portion to the lower portion of the front surface. The switch section 32 has a "PWR" key 36, a "Mode" key 37, a "Menu" key 38, an "MSG" key 39, cursor keys 40, and a ten-key pad 41. The portable radio terminal 20 also has an antenna 34 and light-emitting element 35 on its upper surface.

In this arrangement, the portable radio terminal 20 is empowered by pressing the "PWR" key 36 of the switch section 32, and the telephone function mode and the remote control (RC) function mode are brought into operation by pressing the "Mode" key 37. In the telephone function mode, when a call is received, the call is connected by pressing the "MSG" key 39.

In each function mode, the cursor keys 40 are operated while referring to a menu window displayed on the LCD 31 by pressing the "Menu" key 38. By operating the cursor keys 40, various functions are set in correspondence with selected items set in advance. For example, in the telephone function mode, the settings for the telephone directory and the ringing tone, or the settings for Internet access are made. In normal speech communication in the telephone function mode, the portable radio terminal is connected to a base station (not shown) through an antenna 34 by operating the switch section 32, and then to the telephone set of another party through the communication line. When the communication line is connected, voice information which is input from the microphone 33 is sent to the other party, while the received voice information of the other party is output from the loudspeaker 30.

In the RC function mode, the cursor keys 40 are operated while referring to the menu window displayed on the LCD 31 by pressing the "Menu" key 38. By operating the cursor keys 40, a device is selected from downloaded RC data as a remote control target. The portable radio terminal 20 sends, from the light-emitting element 35 to the electronic device which is a remotely controlled target, a light emission signal having a light emission pattern generated in correspondence with the operation contents of the switch section 32 or cursor keys 40 on the basis of the selected RC data.

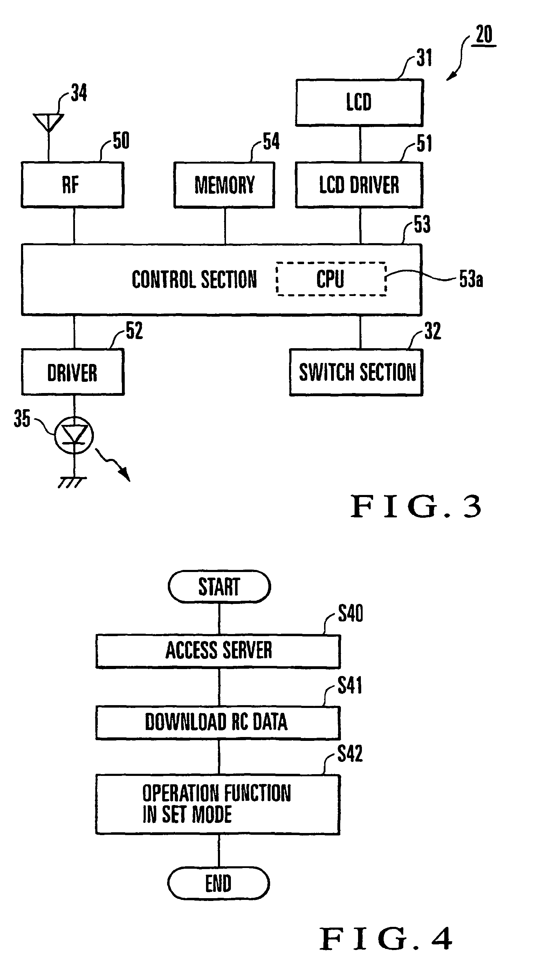

Fig. 3 shows the circuit blocks of the portable radio terminal 20. The portable radio terminal 20 has a radio frequency section (to be referred to herein as an RF section) 50 for performing radio communication through the antenna 34, the LCD 31 (Fig. 2) for displaying information in the form of characters and the like, an LCD driver 51 for driving the LCD 31 to cause it to display information, the light-emitting element 35 (Fig. 2) formed from, e.g., a light-emitting diode, a driver 52 for driving the light-emitting element 35 to make it emit light based on a signal corresponding to RC data, a control section 53 for controlling each section of the terminal, a memory 54 for storing both the processing result of the control section 53 and RC data, and the switch section 32 (Fig. 2) for inputting various operating content information.

In the portable radio terminal 20 having the above arrangement, menu data set in the memory 54 in advance is displayed on the LCD 31 through the LCD driver 51. According to the operating contents of the switch section 32, mobile communication through the RF section 50, Internet access, or the output of a light emission pattern for the remote control of an electronic device is carried out from the light-emitting element 35. The control section 53 has a CPU 53a. The CPU 53a executes the above-described control in accordance with a control program stored in the memory 54.

The outline of the user's preparation operation for implementing the RC function using the portable radio terminal 20 will now be described with reference to Fig. 4. First, the user connects the radio portable terminal 20 to the server 22 through the Internet 21 in the telephone function mode (step S40). Desired RC data is downloaded from the RC data relating to the various electronic devices, which are stored in the memory 22a of the server 22 (step S41).

Next, in the RC function mode, the contents of the RC operation are displayed on the LCD 31 on the basis of the downloaded RC data. The user operates the switch section 32, or the cursor keys 40 while referring to the display. The portable radio terminal 20 generates a light emission pattern of RC data corresponding to the operation contents instructed by the user, and outputs the light emission signal from the light-emitting element 35. Thus, the user is able to operate an electronic device corresponding to the downloaded RC data by the remote control (step S42).

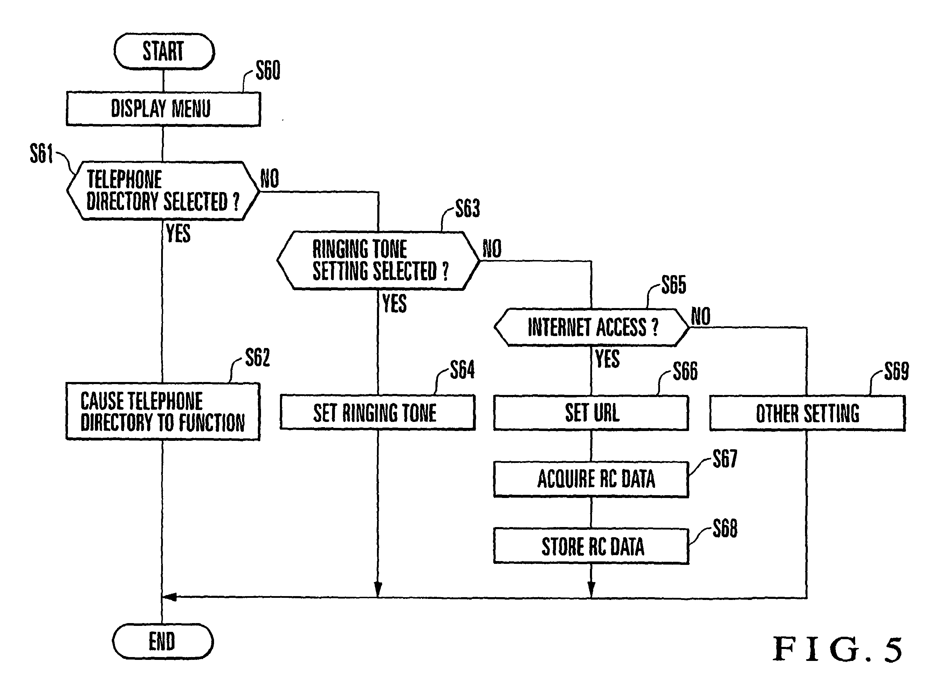

Fig. 5 shows Internet access processing using the control section 53. The control section 53 always monitors the ON state of each key in the switch section 32. and executes the following processing upon the detection of the ON state of the "Menu" key 38. First, the control section 53 displays through the LCD driver 51, the menu data stored in the memory 54 on the LCD 31 (step S60).

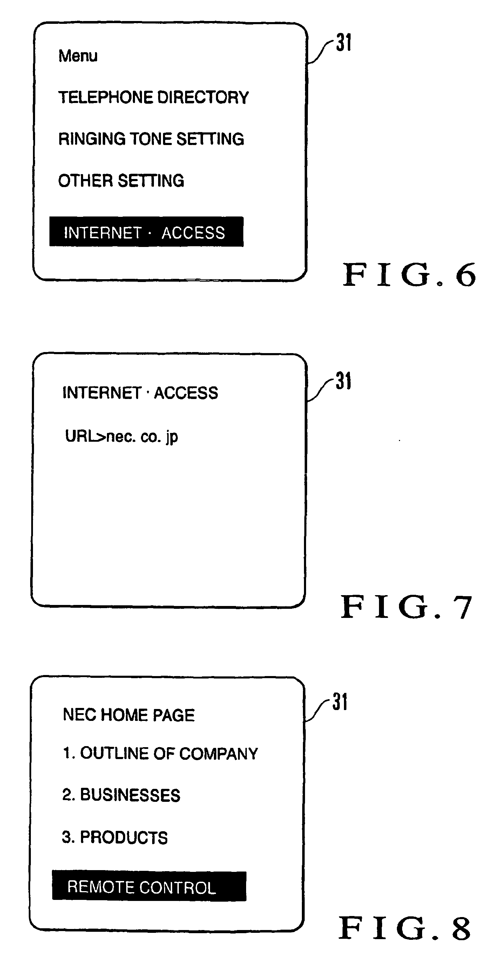

Fig. 6 shows the state of the menu display on the LCD 31 in step S60. When the "Menu" key 38 is pressed, there are displayed on the LCD 31 as items which may be selected "telephone directory" for registering, in advance, the telephone number and name of the other party that is used frequently, "ringing tone setting" for setting the ringing tone in accordance with the caller, "other setting", and "Internet access". A cursor indicating the selection item is moved by operating the cursor keys 40. An item is selected by a predetermined determination button.

After menu display in step S60, when "telephone directory" is selected by operating the cursor keys 40 (step S61: YES), the control section 53 reads out the telephone directory registration information stored in the memory 54 and executes a predetermined telephone directory function (step S62). When "ringing tone setting" is selected and not "telephone directory" (step S63: YES, and step S61: NO), the control section 53 reads out the ringing tone setting information stored in the memory 54 and executes a predetermined ringing tone setting function (step S64). When "Internet access" is selected and not "ringing tone" (step S65: YES, and step S63: NO), the control section 53 reads out URL (Uniform Resource Locator) setting processing information for specifying the positions of various resources on the Internet, which is stored in the memory 54. Thus, a predetermined Internet access function can be executed.

Fig. 7 shows the display state of the LCD 31 in the URL setting processing after the above-described reading of URL setting information. A URL for specifying a server to be accessed on the Internet is input next to "URL>" by operating the switch section 32 (step S66).

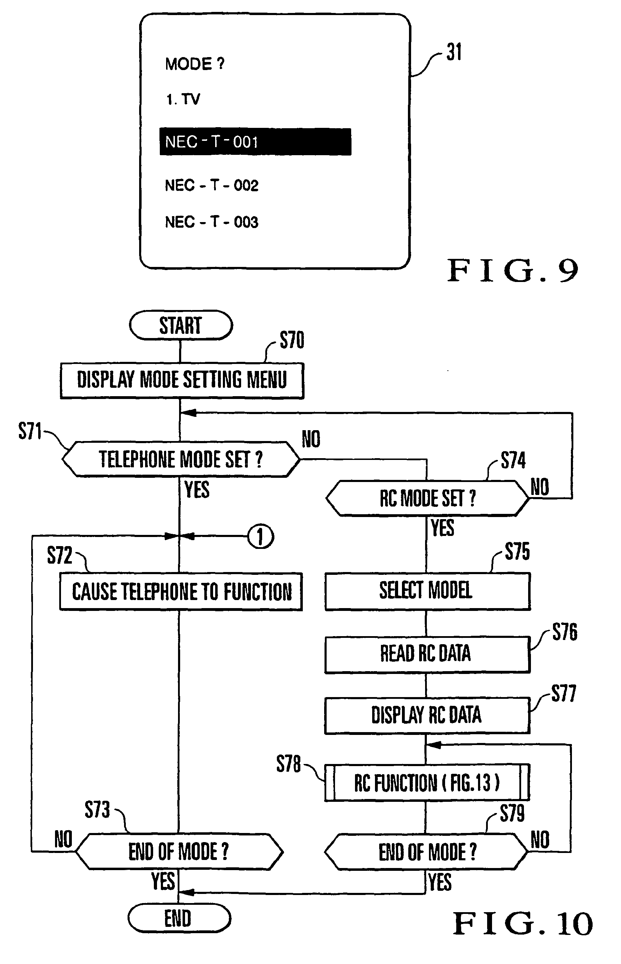

After the URL setting, the control section 53 accesses the server 22 on the Internet through the RF section 50. Next, the control section 53 receives the downloaded display data from the server 22 and displays it on the LCD 31. Figs. 8 and 9 show various windows displayed on the LCD 31 after the download. In this case, an RC data download service is provided as one of the selection items displayed on the home page. The user selects the RC data download service window of the accessed home page by operating the cursor keys 40 and then, as shown in Fig. 9, selects a desired electronic device from various electronic devices displayed to acquire the RC data.

When the user requests the acquisition of the desired RC data, the control section 53 receives the downloaded RC data via the RF section 50 and the antenna 34 (step S67) and stores the RC data in the memory 54 (step S68). At this time, the received RC data and the name of the model or item that can be operated by the RC data are stored in correspondence with each other.

When "other setting" and not "Internet access" is selected by operating the cursor keys 40 (step S65: NO), a setting function is executed on the basis of other setting information stored in the memory 54 (step S69). When processing in step S62, S64, S68, or S69 is ended, the series of processing operations are ended.

After the server has been accessed, and the desired RC data has been downloaded (steps S40 and S41 in Fig. 4), the RC function can be executed, in addition to the normal telephone function by operating the "Mode" key 37 (step S42 in Fig. 4).

Fig. 10 shows the function mode setting processing by the control section 53. The control section 53 monitors the ON state of each key in the switch section 32, and executes the following processing steps upon the detection of the ON state of the "Mode" key 37. First, the control section 53 displays the menu data stored in the memory 54 on the LCD 31 through the LCD driver 51 (step S70) to prompt the user to switch the mode to the telephone function mode, or the RC function mode.

When the user switches the mode to the telephone function mode by operating the switch section 32 (step S71: YES), a predetermined telephone function using mobile communication is executed through the RF section 50 (step S72). The telephone function means the radio communication of a normal portable telephone. e.g.. speech communication with another party, by the operation of the switch section 32. After that, when mode switching is requested again by pressing the "Mode" key 37, the above-described telephone function is carried out unless the end of predetermined telephone function mode is requested (step S73: NO). On the other hand, when the end of telephone function mode is requested (step S73: YES), the series of processing operations is ended. If the mode is switched to the RC function mode (step S74: YES), and not to the telephone function mode (step S71: NO), the control section 53 displays a model selection menu for selecting a desired model from a plurality of types of RC data stored in the memory 54

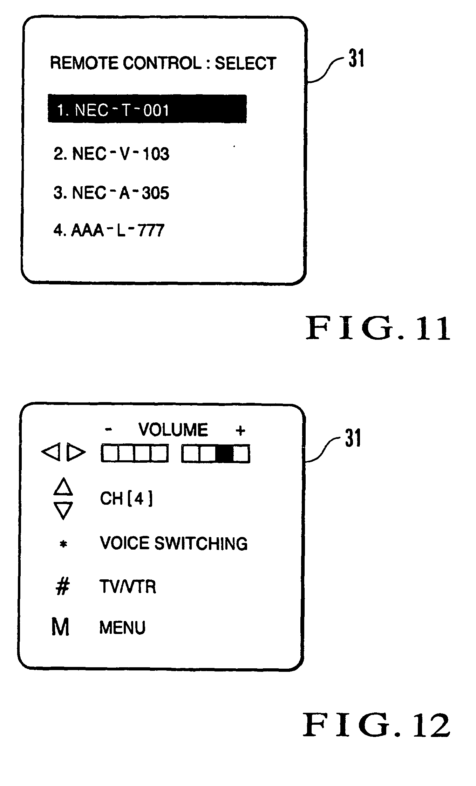

Fig. 11 shows the model selection menu displayed on the LCD 31. More specifically, the RC data downloaded in Fig. 5 are displayed as a list in units of devices or models, and a model for which the RC function is to be executed is selected by operating the cursor keys 40.

As described above, when RC data of a plurality of models are downloaded in advance, and a model is selected in step S75, one portable radio terminal can be commonly used for a plurality of remote operations.

When a model or device is selected in step S75, the control section 53 reads out the RC operation display data of each model or device, which is stored in the memory 54 (step S76), and displays the data on the LCD 31 (step S77). RC operation display data are registered in the memory 54 in advance as display data necessary for remote operations of e.g., a TV, a video tape recorder, an air conditioning apparatus, and the like. An operation which is not available for a model can be disabled by non-registration.

Fig. 12 shows an RC operation window displayed on the LCD 31 when a model name "NEC-T-001" is selected on the model selection menu shown in Fig. 11. The user can operate the model name "NEC-T-001 " using operation keys displayed on the left hand side of the operation contents. Referring to Fig. 12, when a cursor key "Δ" is pressed, "CH (channel number)" can be switched, for example, from "4" to "5" by remote control.

The user implements a desired RC function by operating a switch displayed on the RC operation display window displayed on the LCD 31 in correspondence with the selected model (step S78). After that, when mode switching is requested again by pressing the "Mode" key 37, the above-described RC function is carried out. On the other hand, when the end of the RC function mode is requested (step S79: YES), the series of processing operations is ended.

If switching to the RC function mode is not designated (step S74: NO), the control section 53 displays the mode setting menu again to prompt the user to switch the mode to the telephone function mode or to the RC function mode.

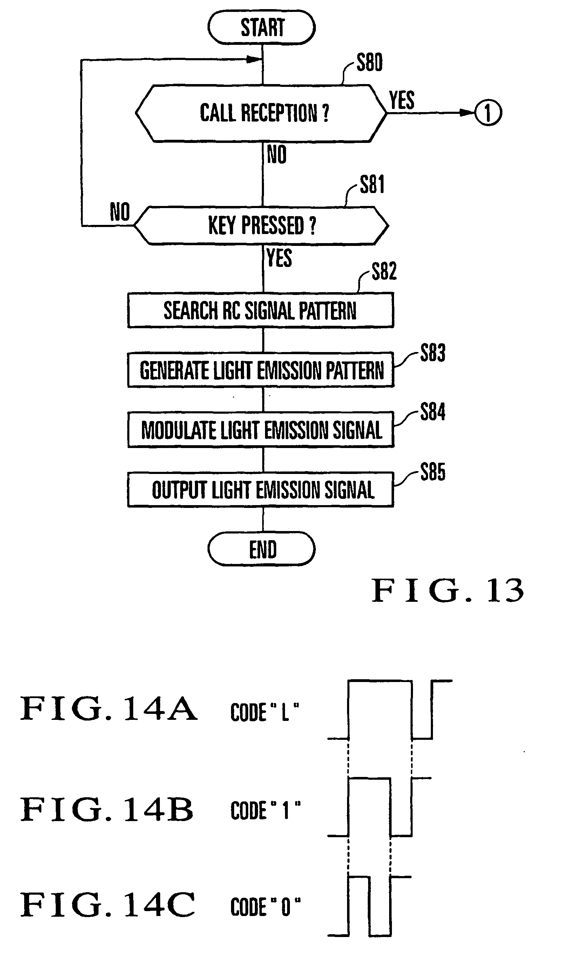

Fig. 13 shows the RC function processing in step S78 in Fig. 10. First, the control section 53 monitors the call reception via the RF section 50 and the antenna 34 (step S80). If call reception is detected (step S80: YES), the RC function is forcibly switched to the telephone function mode in step S72 shown in Fig. 10 to enable a response to be made to the call. If no call reception is detected in step S80 (step S80: NO), the ON state of each key in the switch section 32 is monitored (step S81: NO). When the ON state of a key in the switch section 32 is detected (step S81: YES), an RC signal pattern corresponding to the key which has been pressed is searched from the RC data downloaded in step S67 shown in Fig. 5 (step S82).

A light emission pattern is generated from the RC signal pattern searched in step S82 (step S83), uniquely modulated by about 40 kHz in units of models of each maker to prevent interference with another RC signal for remote operation (step S84), and output from the light-emitting element 35 as a light emission signal (step S85).

The operation of the above-described portable radio terminal will be described next in detail.

RC data registration information in which RC data are registered in units of models or devices of a plurality of makers is stored in the memory 22a of the server 22 in advance. Table 1 shows an example of RC data setting information registered in the server 22.

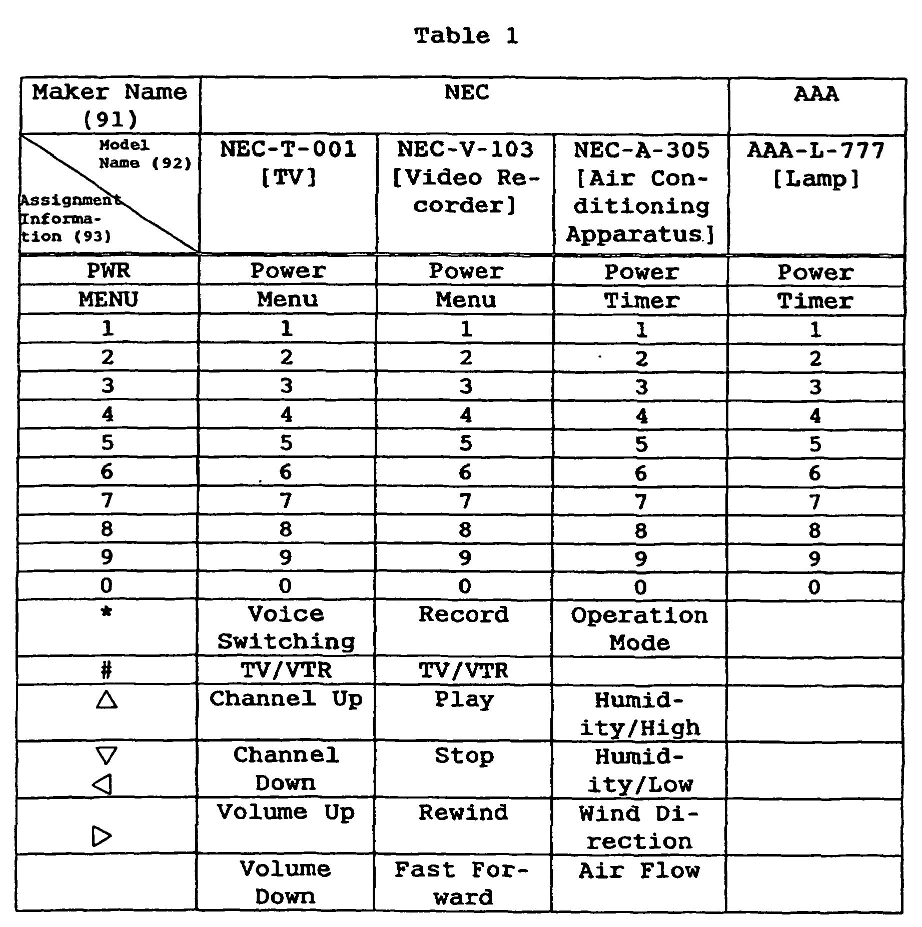

As shown in Table 1, the RC data setting information includes pieces of assignment information 93 which are assigned to the functions of the keys in the switch section 32 in units of model names 92 of TVs, video tape recorders, air conditioning apparatus, and lamps in units of makers 91. For example, for the model name "NEC-T-001" of the maker whose name is "NEC", the "PWR" key is assigned as a power key, the "*" key is assigned as a voice switching key, and the "#" key is assigned as a "TV/VTR" key used to switch between the TV and the video recorder.

A signal code for generating a light emission signal according to the model is predetermined in correspondence with each key. Signal code information shown in Table 2 is stored in the memory 22a of the server 22, together with the RC data setting information shown in Table 1.

**Table 2**

| Operation | Signal Code |
|---|---|
| Power ON/OFF | L101010011010 |
| Volume Up | L000110011010 |
| Volume Down | L010110011010 |
| Channel Up | L101110011010 |
| Channel Down | L001110011010 |
| TV/VTR | L110110011010 |

As shown in Table 2, the signal code information includes signal codes in units of operation contents. For example, the signal code of a light emission signal "volume up" for instructing the remote operation of increasing the volume level is "L000110011010". Each code has a predetermined pattern. Figs. 14A to 14C show the signal patterns of code ""L". code "1", and code "0". respectively. Each signal code shown in Table 2 is formed by combining the signal patterns of these codes. The above-described codes are formed in order to save the storage area.

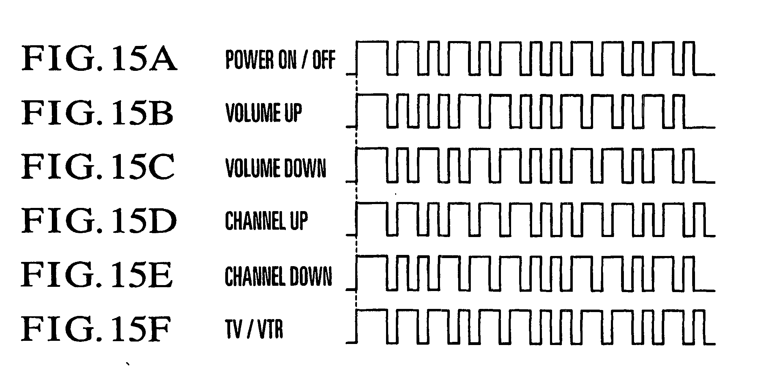

Figs. 15A to 15F show light emission patterns corresponding to signal codes "power ON/OFF", "volume up", "volume down", "channel up", "channel down" and "TV/VTR". respectively.

To add the RC function, when "Internet access" is selected from the menu window shown in Fig. 6, the portable radio terminal 20 displays the URL setting window shown in Fig. 7 on the LCD 31. When the URL of the server in which RC data are stored is set, the portable radio terminal 20 is connected to the Internet through the RF section 50 to access the set server. When the server is accessed, the RC data are downloaded by the operation by the user of the switch section 32. The RC data of a model or device selected by the user is formed from the key assignment information shown in Table 1 and the signal codes shown in Table 2. The received RC data is stored in the memory 54 in correspondence with the model name.

When the user presses the "Mode" key to switch the mode to the RC function mode, the model selection window shown in Fig. 11 is displayed. When a TV model name "NEC-T-001" is selected on the model selection window by the key operation, an RC operation window registered in advance is displayed on the LCD 31 in advance, as shown in Fig. 12. When the cursor key "Δ" is pressed to change the channel to "5", the control section 53 determines this operation as "channel up" on the basis of the RC data setting information shown in Table 1 and reads out the signal code "L101110011010" to generate the light emission pattern shown in Fig. 15D. On the basis of this light emission pattern, a light emission signal is output from the light-emitting element 35, as will be described below. Fig. 15A shows the light emission pattern of "power ON/OFF". Fig. 15B shows the light emission pattern of "volume up", Fig. 15C shows the light emission pattern of "volume down", and Fig. 15E shows the light emission pattern of TV/VTR" switching.

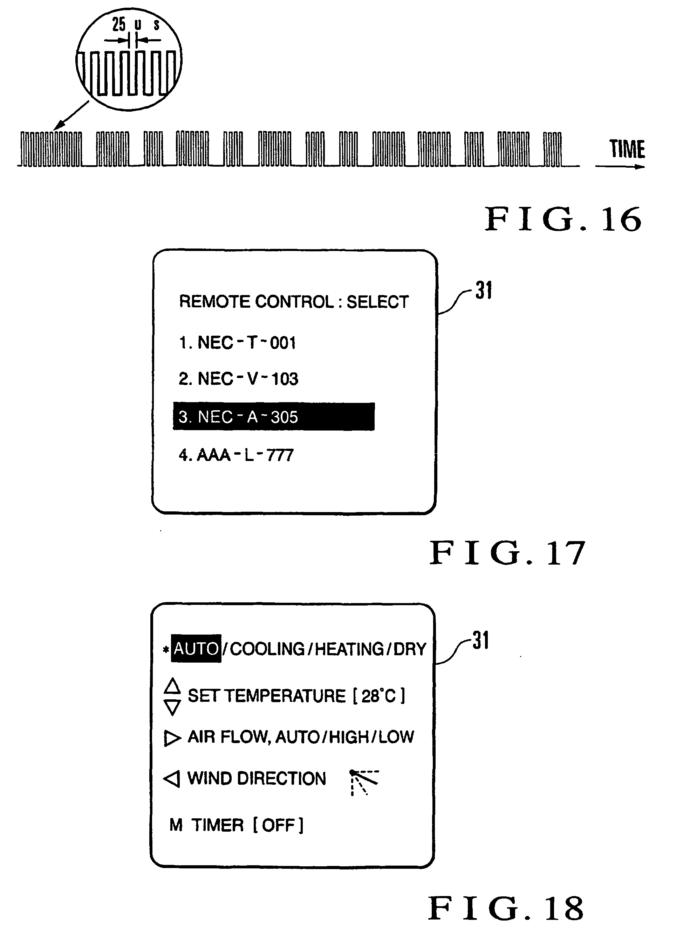

Fig. 16 shows a light emission signal output from the light-emitting element 35. A light emission signal amplified by the driver 52 and uniquely modulated by about 40 kHz in units of models of each maker to prevent operational error due to interference is output from the light-emitting element 35.

In accordance with such switch operation, the display window is updated to the LCD display window shown in Fig. 12. When the volume level changes, the indicator also changes accordingly.

When the mode is switched to the RC function mode to display the model selection window, and, for example, the model having the name "NEC-A-305" of an air conditioning apparatus is selected, as shown in Fig. 17, an RC operation window which has been registered in advance is displayed on the LCD 31, as shown in Fig. 18. When the "** key is pressed three times to change the operation mode to "dry", the control section 53 determines this operation to be an "operation mode" on the basis of the RC data setting information shown in Table 1 and reads out a signal code corresponding to "operation mode" from the downloaded signal code information to generate a light emission pattern. This light emission pattern is uniquely modulated by the driver 52 by about 40 kHz in units of models of each maker to prevent an operating error due to interference, and a light emission signal is output from the light-emitting element 35.

In accordance with such a switch operation, the LCD display window shown in Fig. 18 is updated. For example, when the wind direction changes, the wind direction indicator also changes accordingly.

In the first arrangement described above, RC data are downloaded through the RF section 50 from the server on the Internet, in which the RC data corresponding to remote operations are stored in units of devices to be operated, and are stored in the memory 54 in correspondence with model names in the telephone function mode. After switching to the RC function mode, the downloaded RC data of a model name is read out in correspondence with a selected device as an operation target and makes the contents of the remote operation of the device as an operation target correspond to switch operations of the portable radio terminal 20.

In correspondence with the switch operation of the portable radio terminal 20, an RC signal pattern that enables the remote operation of the device as an operation target is generated and output from the light-emitting element of the portable radio terminal as an infrared signal. Unlike in the previously proposed arrangement, no light-receiving element is required, and the load of the RC function attachment operation to the portable radio terminal is largely reduced.

In addition, even when the RC program has a bug, RC data in the portable radio terminal can be updated by a re-download without exchanging the RC unit main body, unlike the situation in the previously proposed arrangement, thereby always enabling the remote operation of the device based on the latest version of the RC program.

Furthermore, when the portable radio terminal is a portable telephone, the terminal which is operating in the RC function mode is forcibly switched to the telephone function mode upon receiving a call. This provides a portable radio terminal which allows the user quickly to respond to the call and has a large added value without degrading the usual telephone function.

In the second arrangement to be described, instead of adding the RC function by downloading RC data stored in a server on the Internet, a portable radio terminal has a browser function. Using this browser function, contents in which the contents of the RC data stored in a server on the Internet are displayed, the data are described in a predetermined information description language, and linked data are output, thereby adding the RC function.

The communication system to which a portable radio terminal of the second arrangement is applied is the same as in Fig. 1, and a detailed description thereof will be omitted. The outer appearance of the radio portable terminal in the second arrangement is the same as that in Fig. 2, and a detailed description thereof will not be made.

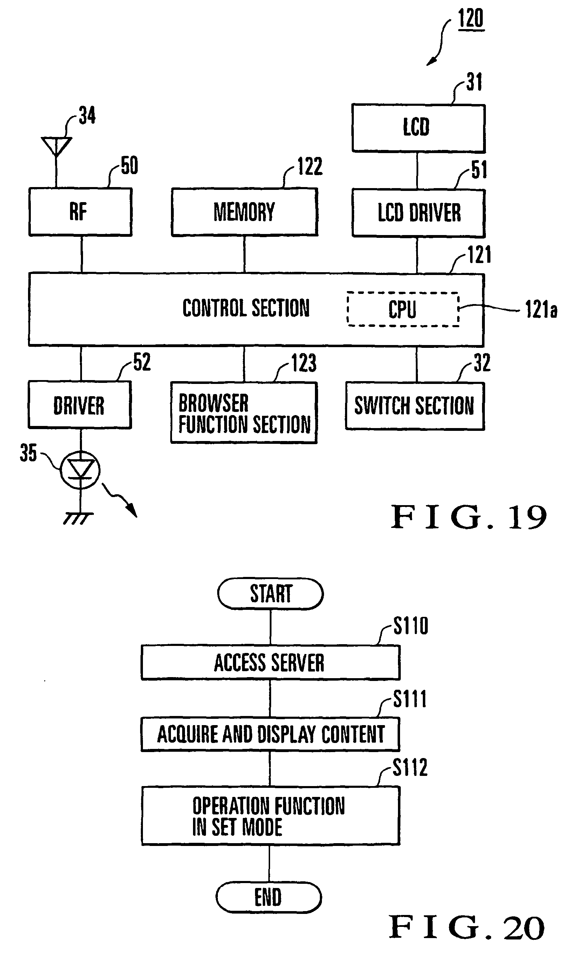

Fig. 19 shows the circuit blocks of the portable radio terminal of the second arrangement. The same reference numerals will be used in Fig. 19 as in the radio portable terminal 20 shown in Fig. 3 to denote the same parts, and a detailed description thereof will not be made. Referring to Fig. 19, a portable radio terminal 120 of the second arrangement is different from that shown in Fig. 3, in that the radio portable terminal has a control section 121 for controlling each section of the terminal, a memory 122 for storing the processing result of the control section 121 and RC data, and a browser function section 123 for displaying the contents described in predetermined information description language on an LCD 31 and for outputting various data linked to the content to the control section 121.

In the portable radio terminal 120 having the above arrangement, the menu data set in the memory 122 in advance is displayed on the LCD 31 through an LCD driver 51. In accordance with the operating contents of a switch section 32 related to the display on the LCD 31, mobile communication through an RF section 50, Internet access, or the output of a light emission pattern for remote control of an electronic device from the light-emitting element 35 is carried out through a driver 52.

The control section 121 has a CPU 121 a. The CPU 121 a executes the above-described control in accordance with a control program stored in the memory 122.

Fig. 20 shows the user's preparatory operation for implementing the RC function using the portable radio terminal having the above arrangement. First, the user connects the portable radio terminal to a server 22 through the Internet 21 in the telephone function mode (step S110). Content data, in which RC data of various electronic devices are described in a predetermined information description language, which are stored in a memory 22a of the server 22, is acquired and displayed on the LCD 31 of the terminal (step S111). By selecting a particular displayed content by the operation of the switch section 32 or the cursor keys 40, the light emission pattern of RC data linked to the content is generated and output from the light-emitting element 35. Thus, the user can operate an electronic device corresponding to the acquired content by remote control (step S112).

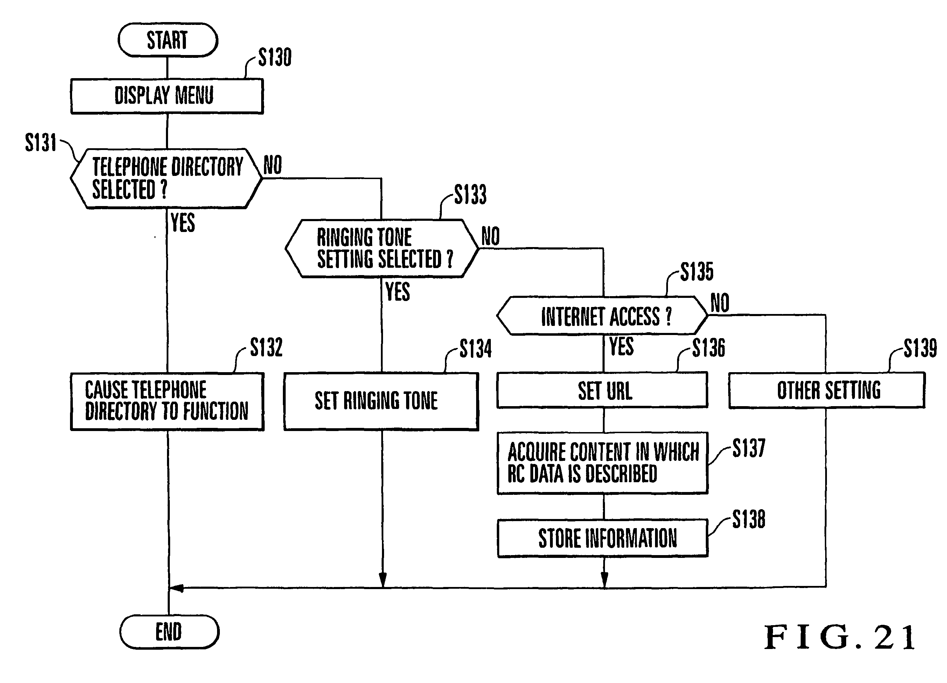

Fig. 21 shows Internet access processing by the control section 121. The control section 121 always monitors the ON state of each key in the switch section 32. and executes the following processing upon detecting the ON state of the "Menu" key. First, the control section 121 displays the menu data stored in the memory 122 4 on the LCD 31, through the LCD driver 51 (step S130).

After the menu display, when "telephone directory" is selected by operating the cursor keys 40 (step S131: YES), the control section 121 reads out telephone directory registration information stored in the memory 122 and executes a predetermined telephone directory function (step S132). When "ringing tone setting" and not "telephone directory" is selected (step S135: YES and step S113 NO) , the control section 121 reads out ringing tone setting information stored in the memory 122 and executes a predetermined ringing tone setting function (step S134). When "Internet access" and not "ringing tone" is selected (step S135: YES and step S133: NO), the control section 121 reads out URL setting processing information which is stored in the memory 122, for specifying the positions of various resources on the Internet. Thus, a URL for specifying the server 22 on the Internet 21, which should be accessed to execute a predetermined Internet access function, is input by operating the switch section 32 (step S136).

After the URL setting, the control section 121 accesses the server 22 on the Internet through the RF section 50. Next, the control section 121 receives through the antenna 34 the content data, in which RC data stored in the memory 22a of the server 22 are described in a predetermined information description language (step S137) and the information is stored in the memory 122 (step S138). Simultaneously, the contents are displayed on the LCD 31 by the browser function section 123.

When "other setting" is selected and not "Internet access" (step S135: NO) the control section 121 executes a setting function on the basis of other setting information stored in the memory 122 (step S139).

After the server 22 is accessed, and content data is acquired in which the desired RC data is described in a predetermined information description language (steps S110 and S111 in Fig. 19), the RC function is executed in addition to the normal telephone function by operating the "Mode" key (step S112 in Fig. 19).

Content data is described in an information description language, for example, the HTML (HyperText Markup Language). The HTML is a text file and can designate ornament or layout of characters in accordance with a code called a tag sandwiched between "<" and ">". When this code is decoded by the browser function section 123, HTML text data is displayed. As a characteristic feature of the HTML, specific display data can be linked to another HTML text. When the device itself has an HTML text for display, a large quantity of data at the link designation can be received only when it is necessary. Content data stored in the memory 22a of the server 22 is linked to RC data used to directly control an electronic device in correspondence with each function name of the RC data.

Hence, in the portable radio terminal 120 of the second arrangement described, the content data received by the browser function section 123 is displayed on the LCD 31 as an HTML text. The user selects a desired RC operation by operating the switch section 32. A light emission pattern is generated in correspondence with the RC data linked to the selected RC operation. A light emission signal amplified by the driver 52 and uniquely modulated by about 40 kHz in units of the models of each maker to prevent an operation error due to interference is output from the light-emitting element 35. Function mode setting processing by the control section 121 of the portable radio terminal 120 according to the second arrangement is the same as processing of the first arrangement shown in Fig. 10, except for the RC function processing in step S78.

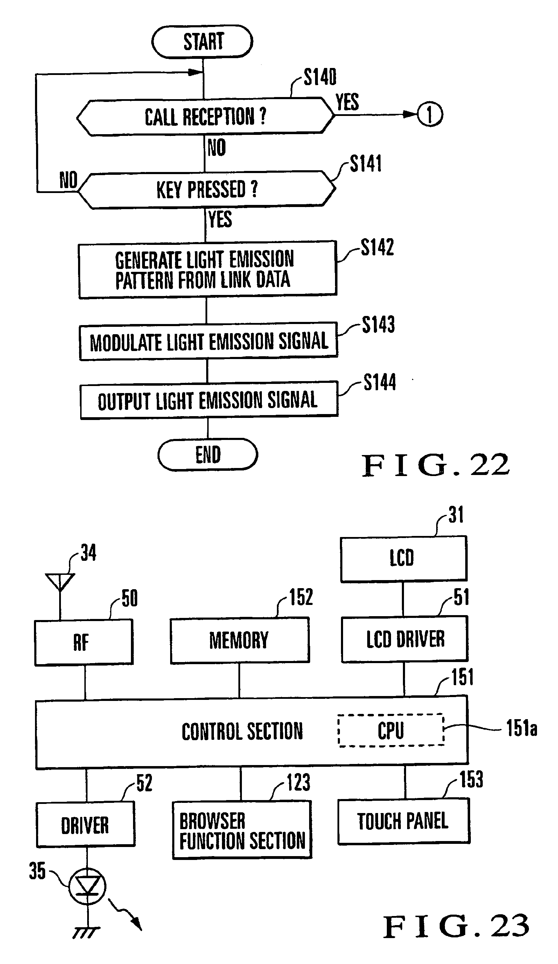

Fig. 22 shows the steps for processing the contents of the RC function step in the second arrangement. First the control section 121 monitors the call reception by the RF section 50 through an antenna 34 (step S140). If the receipt of a call is detected (step S140: YES), the RC function is forcibly switched to the telephone function mode in step S72 shown in Fig. 10 to enable response to the call. If no call reception is detected in step S140 (step S140: NO), the ON state of each key in the switch section 32 for which the contents of each RC operation is linked to the content displayed on the LCD 31 is monitored (step S141: NO). When the ON state of a key in the switch section 32 is detected (step S141: YES), data linked by the browser function section 123 to the key which has been pressed is output to the control section 121. This linked data is, e.g., a signal code shown in Table 2. The control section 121 generates a light emission pattern from the signal patterns of codes shown in Table 1 and Figs. 14A to 14C, as in the first described arrangement (step S142).

A light emission pattern generated in step S142 is uniquely modulated by about 40 kHz in units of models of each maker to prevent interference with another RC signal for remote operation (step S143), and output from the light-emitting element 35 as a light emission signal (step S144).

As described above, the portable radio terminal of the second arrangement described above downloads content data from the server 22 on the Internet 21 through the RF section 50 and stores the content data in the memory 122 in the telephone function mode. The RC data in the content data corresponds to remote operations in units of devices to be operated and are described in a predetermined information description language in advance After switching to the RC function mode, the received content data is displayed by the browser function section 123 in correspondence with the selected device as an operation target, thereby generating an RC signal pattern that enables the remote operation of the device as an operation target from data linked to the RC operation on the content selected by the user's switch operation, and outputting the signal pattern from the light-emitting element 35 as an infrared signal. Even when the number and positions of switches are different from those of the existing RC unit incorporated in the portable radio terminal, the operation on the window displayed on the LCD 31 suffices. For this reason, the operability can be improved, and its application to the existing Internet system is easy.

In the portable radio terminal of the second arrangement, the content data acquired from the server is displayed by the browser function section 123, and the RC operation is executed by a switch operation. However, the present invention is not limited to this. For example, a portable radio terminal of a third arrangement illustrative of the invention has a touch panel and generates a light emission pattern from data linked to an RC operation designated on the touch panel.

The communication system to which the radio portable terminal in the third arrangement is applied is the same as in Fig. 1, and a detailed description thereof will not be made.

Fig. 23 shows the arrangement of a portable radio terminal of the third arrangemnt. The same reference numerals as in the portable radio terminal 120 of the second arrangement shown in Fig. 19 denote the same parts in Fig. 23, and a detailed description thereof will not be made. Referring to Fig. 23, a portable radio terminal 150 according to the third arrangement is different from that shown in Fig. 19, in that the portable radio terminal has a control section 151, which has a CPU 151 a and which controls each section of the terminal, a memory 152 for storing both the processing result of the control section 151 and RC data, and a touch panel 153 for inputting various operation contents.

The portable radio terminal 150 having the above arrangement accesses the Internet in accordance with menu display and receives content data in which RC data are described in a predetermined information description language, as in the second arrangement. The difference is that various operation contents are designated using the touch panel 153. Hence, the operation of the portable radio terminal of the third arrangement is the same as that of the portable radio terminal of the second arrangement, and a detailed description thereof will not be made.

The portable radio terminal of the third arrangement has the touch panel 153 integrated with an LCD 31, so that content data received in correspondence with a selected model is displayed on the LCD 31 as a graphic pattern. Thus, an RC operation window in which keys are laid out at the same positions as in the original RC unit main body can be displayed to give to the user an optimum operation environment in units of models.

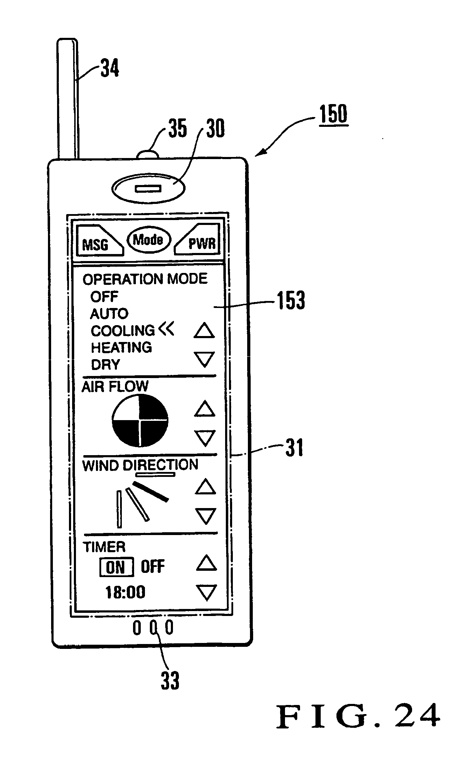

Fig. 24 shows the outer appearance of the portable radio terminal 150 of the third arrangement. The radio portable terminal 150 has, on its front surface, a loudspeaker 30, the touch panel 153 integrated with the upper surface of the LCD 31, and a microphone 33.

On the RC operation window displayed on the LCD 31 as a graphic pattern, each RC operation key is laid out at the same position as in the original RC unit main body. This allows the user to execute a remote operation on the touch panel 153 on the LCD 31, while maintaining the same operability as in the previously described device. For example. RC data for "air flow up" is linked to the position "Δ" of air flow ". When the user presses the position "Δ", a light emission pattern is generated in accordance with RC data linked to the pressed position, and a light emission signal is output from a light-emitting element 35.

The air flow indicator or wind direction indicator displayed on the LCD 31 as graphic patterns is updated in accordance with such switch an operation.

As described above, in the portable radio terminal of the third arrangement, the RC operation window corresponding to the model for RC is displayed, and content data in which RC data are linked to the key positions is received from the server 22 and browsed by a browser function section 123. A key position displayed on the touch panel 153 is directly pressed to generate an RC signal pattern that enables the remote operation of the device as an operation target from R3C data linked to this position and output the signal pattern from the light-emitting element as an infrared signal. This provides a portable radio terminal which has the RC function while having the same functions, visual recognizability, and operability, as in the previously described RC device main body.

In the first to the third arrangements, the light-emitting element has been described as an RC operation control device. However, the present invention is not limited to the use of such a device. For example, the present invention can also be applied to a radio connection technology of what is referred to as the next generation, such as the Bluetooth system or HomeRF system, which make it possible to connect electronic devices including personal computers, portable telephones, and home electronics by radio at home or in an office.

In these systems of the so-called next generation, the state of another electronic device can be grasped or operated by remote control by mutually communicating control commands by radio. In the first to the third arrangements described, a light emission pattern is downloaded as RC data in various forms. However, the present invention can be easily applied to the above-described next generation system by downloading a predetermined control command. In this case, since radio communication is possible, an omnidirectional radio wave can be used, unlike the system using infrared rays from a light-emitting element. Since the user need not direct the light-emitting section to the electronic device as an operation target, the operability of such an arrangement is greatly improved.

In the first to the third arrangements described, the portable radio terminal is a portable telephone. However, the present invention is not limited to use with a portable telephone. For example, the portable radio terminal may be a PDA (Personal Digital Assistant or Organiser) as far as it can access a server and output acquired RC data to the device as an operation target.

The portable radio terminal of the second arrangement described above stores browsed contents in the memory and reads out them from the memory as needed. However, the present invention is not limited to such an arrangement. For example, the contents may be downloaded every time that an RC operation is designated as an RC function.

As has been described in the illustrative arrangements above, unlike in the prior proposal, no light-receiving element is required, and the load of the operation of the RC function attachment to the portable radio terminal is largely reduced. In addition, even when the RC program has a bug, RC data in the portable radio terminal can be updated by redownloading, without exchanging the RC unit main body, unlike in the prior proposal, thereby always enabling the remote operation of the device based on the latest version of the RC program..

Since remote operation data is received in the first mode, and a remote operation signal is sent to the device as an operation target in the second mode, the remote operation data can be received by a portable terminal capable of radio communication, and the RC function can easily be attached to the terminal.

Even when the number and positions of switches are different from those of an existing RC unit incorporated in a portable radio terminal, the operation on the window displayed on the display means suffices. For this reason also, the operability is improved, and the application to the existing Internet system is easy.

A portable radio terminal which has an RC function, while having the same functions, visibility, and operability as the existing RC device main body may thus be provided.

When call reception is detected, the portable radio terminal can be forcibly switched to the first mode to respond to the call. This provides a portable radio terminal as a portable telephone which allows the user to respond quickly to a call, which gives a large added value without degrading the usual telephone function.

Since a light emission signal corresponding to the received remote operation data is output from a light-emitting diode, a portable radio terminal having the RC function of an RC unit which has previously been proposed for the remote operation of an electronic device can be used.

Since a predetermined control command is received, and an omnidirectional remote operation signal, corresponding to the command is sent, the illustrative arrangements described can also be applied to a Bluetooth system or a Home RF system, which has received a great deal of attention as a radio connection technology of the so-called next generation, and makes it possible for connection to be made to a range of electronic devices including personal computers, portable telephones, and home electronics by radio at home or in an office. In addition, since an omnidirectional radio wave can be used, the user need not direct the light-emitting section to the electronic device as an operation target, and the operability can be greatly improved.

## Claims

1. A portable radio terminal (20) comprising:
radio communication means (34, 35) for receiving, through a network (21), remote control data corresponding to input remote operation information for operating a device as an operation target by remote control means,
storage means (54, 122, 152) for storing the remote control data received by the radio communication means (34, 35),
input means (32) for inputting input remote operation information;
remote control signal sending means (35, 52, 53, 121, 151) for sending a remote control signal for operating the device as the operation target by remote control on the basis of the input remote operation information in the remote control data stored in the storage means (54, 122, 152) in correspondence with the input remote operation information input from the input means (32);
wherein the radio communication means (34, 35) is arranged to communicate with another party by radio in accordance with the input remote operation information when a first mode is set by the input remote operation information input from the input means (32), and the remote control signal sending means (35,52,53,121,151) sends the remote control signal when a second mode is set by the input remote operation information input from the input means (32); and **characterised by**:
display means (31) for displaying information including a character; and
content display control means (123) arranged to: (a) display content data linked to the remote control data received by the radio communication means (34,35) on the display means (31) when the second mode is set by the input remote operation information input from the input means (32); and (b) output the remote operation information of the remote control data linked to the designated item when a predetermined item of the content data is designated by the input means (32), wherein when the first mode is set by the input remote operation information input from the input means (32), the radio communication means (34,35) communicates with the another party by radio in accordance with the input remote operation information, the remote control signal sending means (35,52,53,121,151) sends the remote control signal for operating the device as the operation target on the basis of the remote operation information output from the content display control means (123), and wherein said input means (32) comprises a touch panel (153) arranged to detect a position pressed in correspondence with information displayed on the display means as the input remote operation information, wherein said first and second modes are set on the basis of the pressed position detected by the touch panel (153), and wherein when it is detected by the touch panel (153) that a position of a predetermined item of the content data is pressed, the remote operation information of the remote control data linked to the detected item is output.

## Patentansprüche

1. Tragbares Funkendgerät (20), das Folgendes umfasst:
Funkkommunikationsmittel (34, 35), um über ein Netzwerk (21) Fernsteuerdaten zu empfangen, die Eingangsfernbedienungsinformationen zum Bedienen eines Geräts als Bedienungsziel durch Fernsteuerrmittel entsprechen;
Speichermittel (54, 122, 152) zum Speichern der von den Funkkommunikationsmitteln (34, 35) empfangenen Fernsteuerdaten;
Eingabemittel (32) zum Eingeben von Eingangsfernbedienungsinformationen,
Fernsteuersignalsendemittel (35, 52, 53, 121, 151) zum Senden eines Fernsteuersignals zum Bedienen des Geräts als Bedienungsziel durch Fernsteuerung auf der Basis der Eingangsfernbedienungsinformationen in den in den Speichermitteln (54, 122, 152) gespeicherten Fernsteuerdaten entsprechend den vom Eingabemittel (32) eingegebenen Eingangsfernbedienungsinformationen;
wobei die Funkkommunikationsmittel (34, 35) so ausgelegt sind, dass sie mit einer anderen Partei per Funk gemäß den Eingangsfernbedienungsinformationen kommunizieren, wenn durch die vom Eingabemittel (32) eingegebenen Eingangsfernbedienungsinformationen ein erster Modus eingestellt wird, und die Fernsteuersignalsendemittel (35, 52, 53, 121, 151) das Fernsteuersignal senden, wenn durch die vom Eingabemittel (32) eingegebenen Eingangsfernbedienungsinformationen ein zweiter Modus eingestellt wird; und **gekennzeichnet durch**:
Anzeigemittel (31) zum Anzeigen von Informationen einschließlich eines Zeichens; und
Inhaltsanzeigesteuermittel (123) zum: (a) Anzeigen von Inhaltsdaten, die mit den vom Funkkommunikationsmittel (34, 35) empfangenen Fernsteuerdaten verknüpft sind, auf dem Anzeigemittel (31), wenn **durch** die vom Eingabemittel (32) eingegebenen Eingangsfernbedienungsinformationen der zweite Modus eingestellt wird; und (b) Ausgeben der Fernbediensingsinformationen der mit dem bezeichneten Gegenstand verknüpften Fernsteuerdaten, wenn ein vorbestimmter Gegenstand der Inhaltsdaten von dem Eingabemittel (32) designiert wird, wobei dann, wenn **durch** die vom Eingabemittel (32) eingegebenen Eingangsfernbetrebsinformationen der erste Modus eingestellt wird, das Funkkommunikationsmittel (34, 35) mit der anderen Partei per Funk gemäß den Eingangsfernbedienungsinformationen kommuniziert, das Fernsteuersignalsendemittel (35, 52, 53, 121, 151) das Fernsteuersignal zum Bedienen des Geräts als Bedienungsziel auf der Basis der vom Inhaltsanzeigesteuermittel (123) ausgegebenen Fernbedienungsinformationen sendet; und wobei das genannte Eingabemittel (32) ein Touchpanel (153) zum Erkennen einer gedrückten Position entsprechend Informationen umfasst, die auf dem Anzeigemittel als die Eingangsfernbedienungsinformationen angezeigt werden, wobei der genannte erste und zweite Modus auf der Basis der von dem Touchpanel (153) erkannten gedrückten Position eingestellt werden, und wobei, wenn das Touchpanel (153) erkennt, das auf eine Position eines vorbestimmten Gegenstands der Inhaltsdaten gedrückt wird, die Fernbedienungsinformationen der mit dem erkannten Gegenstand verknüpften Fernsteuerdaten ausgegeben werden.

## Revendications

1. Terminal radio portable (20) comprenant :
un moyen de radiocommunications (34, 35) pour recevoir, par le biais d'un réseau (21), des données de télécommande correspondant à des informations d'entrée d'actionnement à distance afin d'actionner un dispositif comme cible opérationnelle par un moyen de télécommande ;
un moyen de mémorisation (54, 122, 152) pour mémoriser les données de télécommande reçues par le moyen de radiocommunications (34, 35) ;
un moyen d'entrée (32) pour entrer les informations d'entrée d'actionnement à distance ;
un moyen d'envoi de signal de télécommande (35, 52, 53, 121, 151) pour envoyer un signal de télécommande afin d'actionner le dispositif comme cible opérationnelle par télécommande selon les informations d'entrée d'actionnement à distance dans les données de télécommande mémorisées dans le moyen de mémorisation (54, 122, 152) en correspondance avec les informations d'entrée d'actionnement à distance entrées depuis le moyen d'entrée (32) ;
dans lequel le moyen de radiocommunications (34, 35) est agencé de façon à communiquer avec un autre correspondant par radio selon les informations d'entrée d'actionnement à distance quand un premier mode est réglé par les informations d'entrée d'actionnement à distance entrées depuis le moyen d'entrée (32), et le moyen d'envoi de signal de télécommande (35, 52, 53, 121, 151) envoie le signal de télécommande quand un second mode est réglé par les informations d'entrée d'actionnement à distance entrées depuis le moyen d'entrée (32) ; et **caractérisé par** :
un moyen d'affichage (31) pour afficher des informations comportant un caractère, et
un moyen de commande d'affichage de contenu (123) agencé pour (a) afficher des données de contenu liées aux données de télécommande reçues par le moyen de radiocommunications (34, 35) sur le moyen d'affichage (31) quand le second mode est réglé par les informations d'entrée d'actionnement à distance entrées depuis le moyen d'entrée (32) ; et (b) produire en sortie les informations d'actionnement à distance des données de télécommande liées à l'élément désigné quand un élément prédéterminé des données de contenu est désigné par le moyen d'entrée (32), dans lequel quand le premier mode est réglé par les informations d'entrée d'actionnement à distance entrées depuis le moyen d'entrée (32), le moyen de radiocommunications (34, 35) communique avec l'autre correspondant par radio conformément aux informations d'entrée d'actionnement à distance, le moyen d'envoi de signal de télécommande (35, 52, 53, 121, 151) envoie le signal de télécommande pour actionner le dispositif comme cible opérationnelle selon les informations d'actionnement à distance produites en sortie par le moyen de commande d'affichage de contenu (123), et dans lequel ledit moyen d'entrée (32) comprend un panneau tactile (153) agencé pour détecter une position enfoncée correspondant aux informations affichées sur le moyen d'affichage comme informations d'entrée d'actionnement à distance, dans lequel lesdits premier et second modes sont établis en fonction de la position enfoncée détectée par le panneau tactile (153), et dans lequel quand le panneau tactile (153) détecte qu'une position d'un élément prédéterminé des données de contenu est enfoncée, les informations d'actionnement à distance des données de télécommande liées à l'élément détecté sont produites en sortie.
